# EUROPEAN PATENT SPECIFICATION

(11) **EP 3 640 848 B1**
(45) Date of publication and mention of the grant of the patent: **18.05.2022**
(21) Application number: 18885870.8
(22) Date of filing: 18.10.2018
(51) Int. Cl.: G06K 17/00, H04W 4/70, H04L 12/66

(54) **METHOD, TERMINAL AND SYSTEM FOR ARTICLE PROCESSING USING RFID AND LPWAN TECHNOLOGY**
VERFAHREN, ENDGERÄT UND SYSTEM ZUR ARTIKELVERARBEITUNG MITTELS RFID- UND LPWAN-TECHNOLOGIE
PROCÉDÉ, TERMINAL ET SYSTÈME DE TRAITEMENT D'ARTICLES UTILISANT LA TECHNOLOGIE RFID ET LPWAN

(30) Priority: 06.12.2017 CN 201711278630
(43) Date of publication of application: 22.04.2020
(73) Proprietor: Advanced New Technologies Co., Ltd., George Town, Grand Cayman KY1-9008 (KY)
(72) Inventor: ZHANG, Hong, Hangzhou, Zhejiang 311121 (CN); CHEN, Li, Hangzhou, Zhejiang 311121 (CN); ZHOU, Le, Hangzhou, Zhejiang 311121 (CN); YAO, Sihai, Hangzhou, Zhejiang 311121 (CN)
(74) Representative: Goddar, Heinz J.
(86) International application number: PCT/CN2018/110758
(87) International publication number: WO 2019/109742

(56) References cited:
- WO-A2-2004/023389
- CN-A- 101 261 721
- CN-A- 101 261 721
- CN-A- 106 228 206
- CN-A- 106 790 643
- CN-A- 108 197 672
- CN-U- 203 338 380
- US-A1- 2014 104 264
- US-B1- 9 652 955
- OUSMANE DIENG ET AL: "A study on IoT solutions for preventing cattle rustling in african context", INTERNET OF THINGS AND CLOUD COMPUTING, ACM, 2 PENN PLAZA, SUITE 701NEW YORKNY10121-0701USA, 22 March 2017 (2017-03-22), pages 1-11, XP058385753, DOI: 10.1145/3018896.3036396 ISBN: 978-1-4503-4774-7

## Description

### TECHNICAL FIELD

Implementations of the present specification relate to the field of computer technology, and in particular, to an article processing method, terminal and system, and an LPWAN gateway.

### BACKGROUND

In conventional technologies, long-range processing is usually performed on articles, for example, by using a radio frequency identification (RFID) technology. Therefore, a solution for implementing short-range processing on the articles is needed.

US 9,652,955 B1 discloses a system and method for transmitting information using first and second wireless communication protocols, including an object having a short range radio frequency signal transmitter for transmitting a signal using the first protocol, the signal including information transmitted from the object; a collector including a signal receiver for receiving the signal transmitted by the short range radio frequency transmitter and further including a collector transmitter that transmits a collector signal using the second protocol via a low power wide area network, the collector signal including the information transmitted from the object; a gateway in wireless communication with the collector via the low power wide area network, the gateway including a gateway receiver for receiving the collector signal; a processing application for processing the information transmitted from the object and creating an information processing outcome; and an end user terminal having an interface for displaying the information processing outcome.

### SUMMARY

Implementations of the present specification describe an article processing method, terminal and system to perform short-range processing on articles, thereby improving accuracy of article processing.

The scope of protection for the invention is defined by the appended claims. The below embodiments, examples and aspects are present for aiding in understanding the background and advantages of the invention.

According to a first aspect, an article processing method, wherein the article processing method is applied to an article processing terminal, and the article processing terminal comprises a radio frequency identification, RFID, reader, a control unit, and a low-power wide-area network, LPWAN, module; and the method includes: pre-storing an article list that includes article identifiers; controlling, by the control unit, an RFID reader to periodically scan a plurality of articles on a shelf, each of the plurality of articles having short-range communication capabilities to obtain an article identifier for each of the plurality of articles; comparing, by the RFID reader, the obtained article identifiers with the article identifiers in the pre-stored article list, to determine whether there is an article change for any article, wherein the article change includes the article having been picked up or put down; determining, by the RFID reader, the article identifier for each article change; controlling, by the control unit, the LPWAN module to send an article change message to an LPWAN gateway for each article change, wherein the article change message includes the determined article identifier and an address of an application server; wherein the article change message is used to instruct the LPWAN gateway to instruct, based on the address, the application server to perform a next processing step on the article identified by the article identifier.

According to a second aspect, an article processing terminal configured to pre-store an article list that includes article identifiers; the article processing terminal includes: a control unit, configured to periodically send a scanning instruction to an RFID reader; and an RFID reader, configured to periodically scan a plurality of articles on a shelf, each of the plurality of articles having short-range communication capabilities based on the scanning instruction; compare the obtained article identifiers with the article identifiers in the pre-stored article list, to determine whether there is an article change for any article, wherein the article change includes the article having been picked up or put down, and determine the article identifier for each article change; and wherein the control unit is further configured to: receive the article identifier; and send a sending instruction to an LPWAN module; and the LPWAN module, configured to send an article change message to an LPWAN gateway for each article change according to the sending instruction, wherein the article change message includes the determined article identifier and an address of an application server; wherein the article change message is used to instruct the LPWAN gateway to instruct, based on the address, the application server to perform a next processing step on the article identified by the article identifier.

According to a third aspect, an article processing system is provided, including: an article processing terminal according to the second aspect, configured to periodically scan a plurality of articles, and send an article identifier of a changed article to an LPWAN gateway; the LPWAN gateway, configured to: receive the article identifier of the changed article; and send the article identifier to an application server; the application server, configured to: receive the article identifier to perform a next processing step on the article identified by the article identifier, and obtain attribute information of the article according to the article identifier; and send the attribute information to a multimedia display; and the multimedia display, configured to receive the attribute information and display the attribute information.

According to the article processing method, terminal and system, and the LPWAN gateway provided in implementations of the present specification, a control unit controls the RFID reader to periodically scan a plurality of short-range articles. When any one of the plurality of short-range articles changes, the RFID reader obtains an article identifier of the article and sends the article identifier to a control unit. After receiving the article identifier, the control unit controls an LPWAN module to send an article change message to the LPWAN gateway. The LPWAN gateway instructs, based on the received article change message, an application server to perform a next processing step on the article. Therefore, short-range processing is performed on articles, and the accuracy of article processing is improved.

### BRIEF DESCRIPTION OF DRAWINGS

To describe technical solutions of implementations of the present specification more clearly, the following briefly introduces the accompanying drawings required for describing the implementations. Apparently, the accompanying drawings in the following description are merely some implementations of the present specification, and for a person skilled in the art, other drawings can be obtained according to these drawings without creative labor.
FIG. 1 is a schematic diagram of an article processing terminal according to an implementation of the present specification;
FIG. 2 is a schematic diagram of an article processing system according to an implementation of the present specification;
FIG. 3 is a flowchart of an article processing method according to an implementation of the present specification;
FIG. 4 is a flowchart of an article processing method according to another implementation of the present specification; and
FIG. 5 is a schematic diagram of an LPWAN gateway according to an implementation of the present specification.

### DESCRIPTION OF IMPLEMENTATIONS

Solutions provided in the present specification are described below with reference to accompanying drawings.

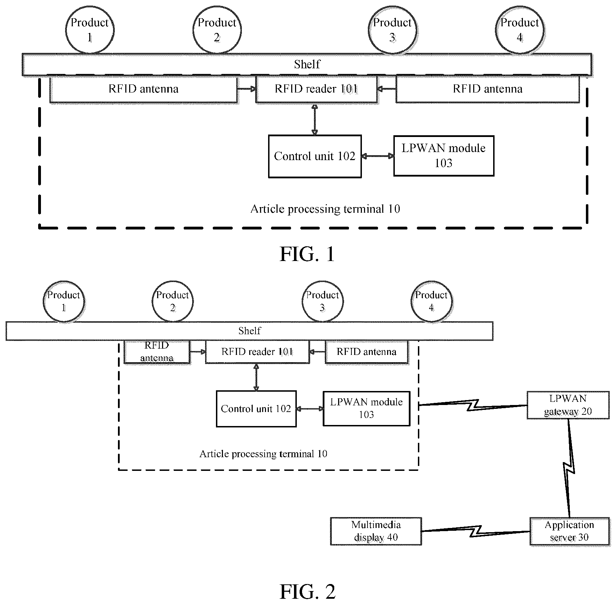

FIG. 1 is a schematic diagram of an article processing terminal 10 according to an implementation of the present specification. In FIG. 1, the article processing terminal 10 includes a radio frequency identification (RFID) reader 101, a control unit 102, and a low-power wide-area network (LPWAN) module 103. The RFID reader 101 can communicate with the control unit 102 by using a general purpose input/output (GPIO) interface, a universal asynchronous receiver/transmitter (UART) interface, or an Ethernet interface. The control unit 102 can send a sending instruction to the LPWAN module 103 by using the GPIO interface or the serial port.

In FIG. 1, the RFID reader 101 may be a near field communication (NFC) reader or an ultra-high frequency (UHF) RFID reader. The control unit 102 may be a microcontroller unit (MCU). The LPWAN module 103 may be a Long Range (LoRa) module or a cellular-based narrowband Internet of Things (NB-IOT). The control unit 102 may control the RFID reader 101 to periodically (for example, 300 ms) scan a plurality of short-range (for example, within 10 cm) articles to detect whether any article has changed (for example, picked up or put down). When detecting that an article has changed, the RFID reader 101 may send an article identifier of the article to the control unit 102. The control unit 102 may read attribute information (for example, origin and composition) of the article based on the article identifier. The control unit 102 may then control the LPWAN module 103 to send the article identifier, attribute information, and/or change status information) of the article to the LPWAN gateway. The change status information of the article here may be, for example, being picked up from a position or being put down at a position.

It is worthwhile to note that a process in which the RFID reader 101 scans a plurality of short-range articles is a process in which the RFID reader 101 identifies electronic tags on the articles by using an RFID antenna (for example, a printed circuit board (PCB) near-field antenna). It can be understood that when the RFID reader 101 is a UHF RFID reader, the RFID reader 101 can connect a plurality of RFID antennas. Because the above identification process belongs to a conventional technology, details are omitted here.

It is also worthwhile to note that when the identified article is a product on a shelf, the article processing terminal 10 may be directly embedded on the shelf. Therefore, the problem of low identification rate caused by light, occlusion and the like when objects are identified at a long-range is alleviated.

Certainly, in practice, the article processing terminal may also include other modules, for example, a battery, and details are omitted in the present application.

The article processing system shown in FIG. 2 may be constituted by the article processing terminal 10 shown in FIG. 1, an LPWAN gateway 20, an application server 30, and a multimedia display 40. The article processing system is used for tracking and other processing of products. In FIG. 2, the article processing terminal 10 may be embedded and installed on the shelf to accurately identify a plurality of short-range articles. The LPWAN gateway 20 can be connected to tens of thousands of nodes (for example, article processing terminals), and has high scalability and flexibility. The application server 30 may be a cloud server. The multimedia display 40 may include an android smart television (TV) and an apple TV, which can display attribute information (for example, origin and composition) to a user. It is also worthwhile to note that the article processing terminal 10 is connected to the LPWAN gateway 20 through the LPWAN, where the distance between the two is usually not more than two kilometers. The LPWAN gateway 20, the application server 30, and the multimedia display 40 are connected through the Internet.

Specifically, when determining that an article on the shelf has changed (for example, an article is picked up), the article processing terminal 10 may send an article change message to the LPWAN gateway 20. After receiving the article change message, the LPWAN gateway 20 may instruct the application server 30 to perform corresponding processing (for example, tracking) on the article, for example, recording change status information of the changed article (for example, recording that an article is picked up at a location). After recording the change status information, the application server 30 may send attribute information of the product to the multimedia display 40. The multimedia display 40 displays the attribute information of the product to the user, so that the user can know about the details of the product.

In FIG. 2, the application server 30 may also analyze and manage the recorded change status information after a period of time. That is, the article processing terminal provided in some implementations of the present specification has data analysis and management functions.

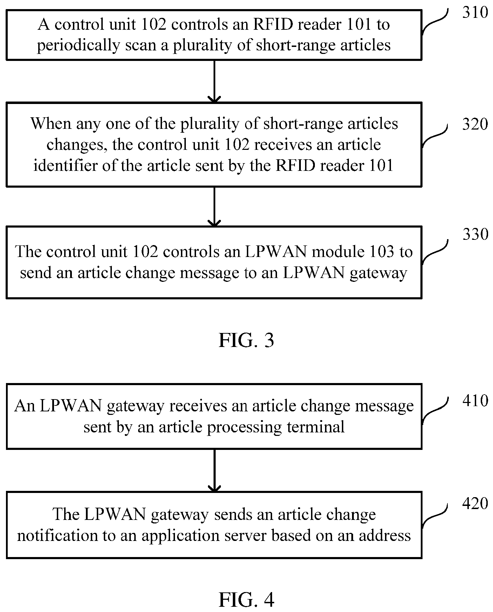

FIG. 3 is a flowchart of an article processing method according to an implementation of the present specification. The method may be performed by a device with a processing capability: a server, a system or an apparatus, for example, the article processing terminal 10 in FIG. 1 or FIG. 2. As shown in FIG. 3, the method may include the following steps:

Step 310: A control unit 102 controls an RFID reader 101 to periodically scan a plurality of short-range articles.

The short-range articles may refer to articles within 10 cm. The plurality of short-range articles have corresponding electronic tags.

Specifically, the control unit 102 may periodically (for example, 300ms) send a scanning instruction to the RFID reader 101 by using a GPIO/UART/Ethernet interface. After receiving the scan instruction, the RFID reader 101 can identify the plurality of short-range articles by using an RFID antenna. In a specific example, an article processing terminal 10 can pre-store an article list, which includes article identifiers of all articles. While identifying the articles through the RFID antenna, the RFID reader 101 obtains the article identifier of each article. The RFID reader 101 can compare the obtained article identifier with the article identifier in the article list to determine whether there is a change in the article and determine the article identifier of the changed article. For example, when an article identifier, which is recorded in the article list, is not currently obtained, the article identifier is the article identifier of the lost article.

In an example in which the product on the shelf is scanned by the article processing terminal, when the product is 30 cm away from the original position, the RFID reader 101 is unable to identify the product, that is, cannot obtain the identifier of the product.

Step 320: When any one of the plurality of short-range articles changes, the control unit 102 receives an article identifier of the article sent by the RFID reader 101.

As described in the previous example, after determining that the article has changed and determining the article identifier of the changed article, the RFID reader 101 may send the article identifier to the control unit 102. After receiving the article identifier, the control unit 102 may read the attribute information of the article from the RFID reader 101 based on the article identifier. It can be understood that the attribute information is obtained by the RFID reader 101 during the process of identifying the articles by using the RFID antenna.

Step 330: The control unit 102 controls the LPWAN module 103 to send the article change message to the LPWAN gateway.

In a specific implementation, the control unit 102 can send a sending instruction to the LPWAN module 103 by using the GPIO interface or the serial port. After receiving the sending instruction, the LPWAN module 103 sends an article change message to the LPWAN gateway 20 through the LPWAN. It can be understood that the article change message may include protocol data (for example, Lora protocol data), an article identifier of a changed article (or an article identifier, attribute information, and/or change status information), an identifier of an article processing terminal, an address of the application server 30, and the like.

After receiving the article change message, the LPWAN gateway 20 can separate protocol data from the article change message. Then, the LPWAN gateway 20 sends the article identifier (or article identifier, attribute information, and/or change status information) of the changed article, identifier of the article processing terminal, etc. to the application server 30 based on the address of the application server 30. Thus, the application server 30 performs corresponding processing, for example, recording the change status information of the article. For example, when the application server 30 receives the change status information of the lost article, and the change status information is: picked up from a shelf I of store A, the application server 30 will record that: the × × article is picked up from the shelf I of store A. After the change status information is recorded, if the attribute information is also received, the attribute information of the article can be sent to the multimedia display 40 so that the user can know about the details of the product.

It is worthwhile to note that, for communication security, the LPWAN gateway 20 usually encrypts a message when sending the message to the application server 30. The application server 30 decrypts the encrypted message first and then processes the message accordingly (for example, tracking).

It is also worthwhile to note that the application server 30 in the previous implementation of the present specification may analyze the change status information related to an article after a period of time (for example, a day) and feed back an analysis result to a manufacturer. For example, if a dress is picked up many times in a day, but eventually is put down, an obtained analysis result may be that: the dress may look good, but uncomfortable to wear. That is, the application server 30 can collect the trend data of the product, thus greatly promoting refined data operation of the retail industry.

FIG. 4 is a flowchart of an article processing method according to another implementation of the present specification. The method may be performed by an LPWAN gateway 102 in FIG. 2. As shown in FIG. 4, the method may include the following steps:

Step 410: An LPWAN gateway receives an article change message sent by an article processing terminal.

The article processing terminal 10 uses the RFID reader 101 to scan if an article changes. If the article changes, a change message is sent to the LPWAN gateway 20. The article change message may include the article identifier of the changed article and the address of the application server 30.

Step 420: The LPWAN gateway sends an article change notification to the application server based on the address.

The article change notification includes the article identifier. After receiving the article change notification, the application server 30 performs a next processing step on the article identified by the article identifier, for example, recording the change status information of the article.

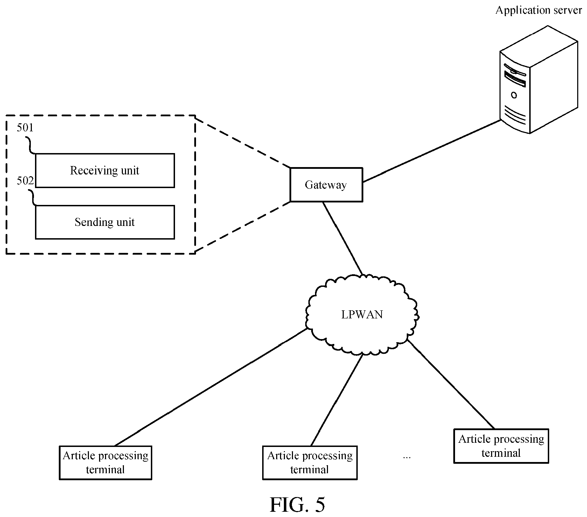

Corresponding to the previous article processing method, an LPWAN gateway is also provided in an implementation of the present specification. As shown in FIG. 5, the gateway includes: a receiving unit 501 and a sending unit 502.

The receiving unit 501 is configured to receive an article change message sent by an article processing terminal, where the article change message includes an article identifier of a changed article and an address of an application server. The article identifier is read by the article processing terminal by using the RFID reader.

The sending unit 502 is configured to send an article change notification to the application server based on the address, where the article change notification includes an article identifier. The article change notification is used to instruct the application server to perform a next processing step on the article identified by the article identifier.

The functions of the functional modules of the apparatus in the previous implementations of the present specification may be implemented by performing the steps of the previous method implementations. Therefore, details of a specific operation process of the apparatus provided in one implementation of the present specification are omitted here.

The LPWAN gateway provided in an implementation of the present specification may receive the article change message sent by the article processing terminal and send the article change message to the application server. Thus, the short-range processing on the article is realized.

A person skilled in the art should understand that in one or more of the previous examples, the functions described in the present specification may be implemented in hardware, software, firmware, or any combination thereof. When being implemented using software, these functions can be stored in a computer-readable medium or transmitted as one or more instructions or codes on the computer-readable medium.

The purpose, technical solutions and beneficial effects of the present specification are further described in detail in the specific implementation described above. It should be understood that the above description is merely a specific implementation of the present specification and is not intended to limit the protection scope of the present specification.

## Claims

1. An article processing method, wherein the article processing method is applied to an article processing terminal (10), and the article processing terminal comprises a radio frequency identification, RFID, reader (101), a control unit (102), and a low-power wide-area network, LPWAN, module (103); and the method comprises:
pre-storing an article list that includes article identifiers;
controlling (310), by the control unit (102), an RFID reader (101) to periodically scan a plurality of articles (1, 2, 3, 4) on a shelf, each of the plurality of articles having short-range communication capabilities, to obtain an article identifier for each of the plurality of articles;
comparing, by the RFID reader, the obtained article identifiers with the article identifiers in the pre-stored article list, to determine whether there is an article change for any article, wherein the article change includes the article having been picked up or put down;
determining, by the RFID reader, the article identifier for each article change;
controlling (330), by the control unit (102), the LPWAN module (103) to send an article change message to an LPWAN gateway (20) for each article change, wherein the article change message comprises the determined article identifier and an address of an application server (30), wherein the article change message is used to instruct the LPWAN gateway to instruct, based on the address, the application server to perform a next processing step on the article identified by the article identifier.

2. The method of claim 1, wherein the article processing terminal is embedded and installed on the shelf.

3. The method of claim 1, wherein when an article identifier, which is recorded in the article list, is not currently obtained, it is determined that the article identifier is the article identifier of a lost article.

4. The method according to claim 1, wherein the RFID reader (101) is a near field communication, NFC, reader.

5. The method according to claim 1, wherein the LPWAN module (103) is a Long Range, LoRa, module or a cellular-based narrowband Internet of Things, NB-IOT.

6. An article processing terminal (10),
configured to pre-store an article list that includes article identifiers; the article processing terminal comprising:
a control unit (102), configured to periodically send a scanning instruction to an RFID reader (101); and
an RFID reader (101), configured to
periodically scan a plurality of articles (1, 2, 3, 4) on a shelf, each of the plurality of articles having short-range communication capabilities based on the scanning instruction, to obtain an article identifier for each of the plurality of articles;
compare the obtained article identifiers with the article identifiers in the pre-stored article list, to determine whether there is an article change for any article, wherein the article change includes the article having been picked up or put down, and
determine the article identifier for each article change; and wherein
the control unit (102) is further configured to: receive the article identifier; and send a sending instruction to an LPWAN module (103); and
the LPWAN module (103), configured to send an article change message to an LPWAN gateway (20) for each article change according to the sending instruction, wherein the article change message comprises the determined article identifier and an address of an application server (30), wherein the article change message is used to instruct the LPWAN gateway to instruct, based on the address, the application server to perform a next processing step on the article identified by the article identifier.

7. The terminal according to claim 6, wherein the RFID reader (101) is a near field communication, NFC, reader.

8. The terminal according to claim 6, wherein the LPWAN module (103) is a LoRa module or a cellular-based narrowband Internet of Things, NB-IOT.

9. An article processing system, comprising:
an article processing terminal (10) according to one of claims 6 to 8, configured to periodically scan a plurality of articles, and send an article identifier of a changed article to an LPWAN gateway (20);
the LPWAN gateway (20), configured to: receive the article identifier of the changed article; and send the article identifier to an application server (30);
the application server (30), configured to: receive the article identifier to perform a next processing step on the article identified by the article identifier, and obtain attribute information of the article according to the article identifier; and send the attribute information to a multimedia display (40); and
the multimedia display (40), configured to receive the attribute information and display the attribute information.

## Patentansprüche

1. Artikelverarbeitungsverfahren, wobei das Artikelverarbeitungsverfahren auf ein Artikelverarbeitungsendgerät (10) angewendet wird und das Artikelverarbeitungsendgerät ein Funkfrequenzidentifikationslesegerät, RFID-Lesegerät, (101), eine Steuereinheit (102) und ein Modul eines Fernbereichsnetzes mit niedriger Leistung, LPWAN-Modul, (103) umfasst; und das Verfahren Folgendes umfasst:
im Voraus Speichern einer Artikelliste, die Artikelkennungen enthält;
Steuern (310) durch die Steuereinheit (102) eines RFID-Lesegeräts (101), um eine Mehrzahl von Artikeln (1, 2, 3, 4) auf einem Regal periodisch abzutasten, wobei jeder der Mehrzahl von Artikeln Kurzstreckenkommunikationsfähigkeiten besitzt, um eine Artikelkennung für jeden der Mehrzahl von Artikeln zu erhalten;
Vergleichen durch das RFID-Lesegerät der erhaltenen Artikelkennungen mit den Artikelkennungen in der im Voraus gespeicherten Artikelliste, um zu bestimmen, ob es eine Artikeländerung für einen Artikel gibt, wobei die Artikeländerung umfasst, dass der Artikel aufgenommen oder abgelegt wurde;
Bestimmen durch das RFID-Lesegerät der Artikelkennung für jede Artikeländerung;
Steuern (330) durch die Steuereinheit (102) des LPWAN-Moduls (103), eine Artikeländerungsnachricht an ein LPWAN-Gateway (20) für jede Artikeländerung zu senden, wobei die Artikeländerungsnachricht die bestimmte Artikelkennung und eine Adresse eines Anwendungs-Servers (30) umfasst, wobei die Artikeländerungsnachricht verwendet wird, um das LPWAN-Gateway anzuweisen, anhand der Adresse den Anwendungs-Server anzuweisen, einen nächsten Verarbeitungsschritt an dem Artikel, der durch die Artikelkennung identifiziert wird, auszuführen.

2. Verfahren nach Anspruch 1, wobei das Artikelverarbeitungsendgerät auf dem Regal eingebettet und installiert ist.

3. Verfahren nach Anspruch 1, wobei dann, wenn eine Artikelkennung, die in der Artikelliste aufgezeichnet ist, nicht aktuell erhalten wird, bestimmt wird, dass die Artikelkennung die Artikelkennung eines verlorenen Artikels ist.

4. Verfahren nach Anspruch 1, wobei das RFID-Lesegerät (101) ein Nahfeldkommunikationslesegerät, NFC-Lesegerät, ist.

5. Verfahren nach Anspruch 1, wobei das LPWAN-Modul (103) ein Langstreckenmodul, LoRa-Modul, oder ein zellbasiertes schmalbandiges Internet der Dinge, NB-IOT, ist.

6. Artikelverarbeitungsendgerät (10),
das konfiguriert ist, eine Artikelliste, die Artikelkennungen enthält, im Voraus zu speichern; wobei das Artikelverarbeitungsendgerät Folgendes umfasst:
eine Steuereinheit (102), die konfiguriert ist, eine Abtastanweisung periodisch an ein RFID-Lesegerät (101) zu senden; und
ein RFID-Lesegerät (101), das konfiguriert ist zum:
periodischen Abtasten einer Mehrzahl von Artikeln (1, 2, 3, 4) auf einem Regal, wobei jeder der Mehrzahl von Artikeln anhand der Abtastanweisung Kurzstreckenkommunikationsfähigkeiten besitzt, um eine Artikelkennung für jeden der Mehrzahl von Artikeln zu erhalten;
Vergleichen der erhaltenen Artikelkennungen mit den Artikelkennungen in der im Voraus gespeicherten Artikelliste, um zu bestimmen, ob es eine Artikeländerung für einen Artikel gibt, wobei die Artikeländerung enthält, dass der Artikel aufgenommen oder abgelegt wurde, und
Bestimmen der Artikelkennung für jede Artikeländerung; wobei
die Steuereinheit (102) ferner konfiguriert ist zum: Empfangen der Artikelkennung; und Senden einer Sendeanweisung an ein LPWAN-Modul (103); und
das LPWAN-Modul (103) konfiguriert ist, eine Artikeländerungsnachricht an ein LPWAN-Gateway (20) für jede Artikeländerung gemäß der Sendeanweisung zu senden, wobei die Artikeländerungsnachricht die bestimmte Artikelkennung und eine Adresse eines Anwendungs-Servers (30) umfasst, wobei die Artikeländerungsnachricht verwendet wird, um das LPWAN-Gateway anzuweisen, anhand der Adresse den Anwendungs-Server anzuweisen, einen nächsten Verarbeitungsschritt an dem Artikel, der durch die Artikelkennung identifiziert wird, auszuführen.

7. Endgerät nach Anspruch 6, wobei das RFID-Lesegerät (101) ein Nahfeldkommunikationslesegerät, NFC-Lesegerät, ist.

8. Endgerät nach Anspruch 6, wobei das LPWAN-Modul (103) ein LoRa-Modul oder ein zellbasiertes schmalbandiges Internet der Dinge, NB-IOT, ist.

9. Artikelverarbeitungssystem, das Folgendes umfasst:
ein Artikelverarbeitungsendgerät (10) nach einem der Ansprüche 6 bis 8, das konfiguriert ist, eine Mehrzahl von Artikeln periodisch abzutasten und eine Artikelkennung eines geänderten Artikels an ein LPWAN-Gateway (20) zu senden;
wobei das LPWAN-Gateway (20) konfiguriert ist zum: Empfangen der Artikelkennung des geänderten Artikels; und Senden der Artikelkennung an einen Anwendungs-Server (30);
wobei der Anwendungs-Server (30) konfiguriert ist zum: Empfangen der Artikelkennung, um einen nächsten Verarbeitungsschritt an dem durch die Artikelkennung identifizierten Artikel auszuführen und Attributinformationen des Artikels gemäß der Artikelkennung zu erhalten; und Senden der Attributinformationen an eine Multimediaanzeige (40); und
wobei die Multimediaanzeige (40) konfiguriert ist, die Attributinformationen zu empfangen und die Attributinformationen anzuzeigen.

## Revendications

1. Procédé de traitement d'articles, le procédé de traitement d'articles s'appliquant à un terminal (10) de traitement d'articles et le terminal de traitement d'articles comprenant un lecteur d'identification radiofréquence, RFID, (101), une unité de commande (102) et un module de réseau étendu à faible puissance, LPWAN, (103) ; et le procédé comprenant :
le stockage au préalable d'une liste d'articles qui comporte des identifiants d'article ;
la commande (310), par l'unité de commande (102), à un lecteur RFID (101) de scanner périodiquement une pluralité d'articles (1, 2, 3, 4) sur une étagère, chacun de la pluralité d'articles ayant des capacités de communication à courte portée, afin d'obtenir un identifiant d'article pour chacun de la pluralité d'articles ;
la comparaison, par le lecteur RFID, des identifiants d'article obtenus aux identifiants d'article dans la liste d'articles stockée au préalable, afin de déterminer s'il y a un changement d'article pour un article quelconque, le changement d'article comportant l'enlèvement ou la dépose de l'article ;
la détermination, par le lecteur RFID, de l'identifiant d'article pour chaque changement d'article ;
la commande (330), par l'unité de commande (102), au module LPWAN (103) d'envoyer un message de changement d'article à une passerelle LPWAN (20) pour chaque changement d'article, le message de changement d'article comprenant l'identifiant d'article déterminé et une adresse d'un serveur d'application (30), le message de changement d'article servant à donner pour instruction à la passerelle LPWAN de donner pour instruction, sur la base de l'adresse, au serveur d'application de réaliser une prochaine étape de traitement sur l'article identifié par l'identifiant d'article.

2. Procédé selon la revendication 1, dans lequel le terminal de traitement d'articles est incorporé et installé sur l'étagère.

3. Procédé selon la revendication 1, dans lequel, lorsqu'un identifiant d'article, qui est enregistré dans la liste d'articles, n'est pas obtenu à ce moment-là, il est déterminé que l'identifiant d'article est l'identifiant d'article d'un article perdu.

4. Procédé selon la revendication 1, dans lequel le lecteur RFID (101) est un lecteur de communication en champ proche, NFC.

5. Procédé selon la revendication 1, dans lequel le module LPWAN (103) est un module à longue portée, LoRa, ou du type Internet des objets à bande étroite, NB-IoT, cellulaire.

6. Terminal (10) de traitement d'articles, configuré pour stocker au préalable une liste d'articles qui comporte des identifiants d'article ; le terminal de traitement d'articles comprenant :
une unité de commande (102), configurée pour envoyer périodiquement une instruction de scannage à un lecteur RFID (101) ; et
un lecteur RFID (101), configuré pour scanner périodiquement une pluralité d'articles (1, 2, 3, 4) sur une étagère, chacun de la pluralité d'articles ayant des capacités de communication à courte portée sur la base de l'instruction de scannage, afin d'obtenir un identifiant d'article pour chacun de la pluralité d'articles ;
comparer les identifiants d'article obtenus aux identifiants d'article dans la liste d'articles stockée au préalable, afin de déterminer s'il y a un changement d'article pour un article quelconque, le changement d'article comportant l'enlèvement ou la dépose de l'article, et
déterminer l'identifiant d'article pour chaque changement d'article ; et
l'unité de commande (102) étant configurée en outre pour : recevoir l'identifiant d'article ; et envoyer une instruction d'envoi à un module LPWAN (103) ; et
le module LPWAN (103), configuré pour envoyer un message de changement d'article à une passerelle LPWAN (20) pour chaque changement d'article selon l'instruction d'envoi, le message de changement d'article comprenant l'identifiant d'article déterminé et une adresse d'un serveur d'application (30), le message de changement d'article servant à donner pour instruction à la passerelle LPWAN de donner pour instruction, sur la base de l'adresse, au serveur d'application de réaliser une prochaine étape de traitement sur l'article identifié par l'identifiant d'article.

7. Terminal selon la revendication 6, dans lequel le lecteur RFID (101) est un lecteur de communication en champ proche, NFC.

8. Terminal selon la revendication 6, dans lequel le module LPWAN (103) est un module LoRa ou du type Internet des objets à bande étroite, NB-IoT, cellulaire.

9. Système de traitement d'articles, comprenant :
un terminal (10) de traitement d'articles selon l'une des revendications 6 à 8, configuré pour scanner périodiquement une pluralité d'articles et envoyer un identifiant d'article d'un article changé à une passerelle LPWAN (20) ;
la passerelle LPWAN (20), configurée pour : recevoir l'identifiant d'article de l'article changé ; et envoyer l'identifiant d'article à un serveur d'application (30) ;
le serveur d'application (30), configuré pour : recevoir l'identifiant d'article pour réaliser une prochaine étape de traitement sur l'article identifié par l'identifiant d'article, et obtenir des informations d'attribut relatives à l'article selon l'identifiant d'article ; et envoyer les informations d'attribut à un affichage multimédia (40) ; et
l'affichage multimédia (40), configuré pour recevoir les informations d'attribut et afficher les informations d'attribut.
